# EUROPÄISCHE PATENTANMELDUNG

(11) **EP 1 452 415 A1**
(43) Veröffentlichungstag der Anmeldung: **01.09.2004**
(21) Anmeldenummer: 03028920.1
(22) Anmeldetag: 17.12.2003
(51) Int. Cl.: B60T 13/36

(54) **Druckluftbetätigte Bremseinrichtung eines Schienenfahrzeugs**

(30) Priorität: 31.01.2003 DE 10303922
(71) Anmelder: KNORR-BREMSE Systeme für Schienenfahrzeuge GmbH, 80809 München (DE)
(72) Erfinder: Knoss, Rainer, 80637 München (DE); Huber, Jürgen, 81549 München (DE); Rasel, Thomas, 81547 München (DE)
(74) Vertreter: Mattusch, Gundula

(57) **Zusammenfassung**

Die Erfindung betrifft eine druckluftbetätigte Bremseinrichtung (1) eines Schienenfahrzeugs, beinhaltend wenigstens folgende, innerhalb eines geschlossenen und im wesentlichen stets die gleiche Arbeitsluftmenge zirkulierenden Luftkreislaufs (20) angeordnete Bauelemente :
a) Einen Arbeitsluft speichernden Hauptluftbehälter (24) mit veränderbarem Volumen zum Einstellen eines vorgegebenen Druckniveaus;
b) ein Luftverdichter (28) zur Verdichtung der Arbeitsluft;
c) einen Vorratsluftbehälter (30) zur Speicherung einer wenigstens zum Bremsen oder Bremslösen benötigten Menge an verdichteter Arbeitsluft;
d) einen pneumatischen Bremszylinder (4) mit wenigstens einer Druckkammer (12), welche einerseits mit dem Vorratsluftbehälter (30) und andererseits mit dem Hauptluftbehälter (24) in Verbindung bringbar ist..

## Beschreibung

### Stand der Technik

Die Erfindung betrifft eine druckluftbetätigte Bremseinrichtung eines Schienenfahrzeugs gemäß Anspruch 1.

Aus dem Stand der Technik sind druckluftbetätigte Bremseinrichtungen bekannt, bei welchen die Bremse durch Einsteuem von Druckluft in einen Bremszylinder zugespannt wird. Diese Art von aktivem Bremszylinder wird beispielsweise für die Betriebsbremse von Schienenfahrzeugen eingesetzt. Weiterhin sind druckluftbetätigte Bremseinrichtungen mit passiven Bremszylindern bekannt, bei welchen das Zuspannen der Bremse durch Federkraft erfolgt und die Bremse durch Einsteuern von Druckluft gelöst wird. Solche Bremsen sind folglich trotz eines Druckluftverlusts in Zuspannrichtung funktionsfähig und werden beispielsweise für Park- oder Notbremseinrichtungen von Schienenfahrzeugen verwendet.

Druckluftbetätigte Bremseinrichtungen weisen üblicherweise einen aus der Umgebung Umgebungsluft ansaugenden und verdichtenden zentralen Verdichter sowie einen diesem nachgeordneten Lufttrockner auf, um getrocknete Druckluft einem Hauptluftbehälter zuzuführen, von welchem über eine Hauptluftbehälterleitung den Bremszylindern beispielsweise eines Drehgestells zugeordnete Vorratsluftbehälter mit Druckluft versorgt werden. Die verbrauchte Arbeitsluft wird in die Umgebung abgelassen. Der Lufttrockner ist bei dieser Anordnung notwendig, um aus der angesaugten und verdichteten Umgebungsluft die für die Funktion und die Haltbarkeit der Bremskomponenten schädlichen Staub- und Wasserdampfanteile abzuscheiden. Solche Lufttrockner sind meist als Adsorptionstrockner ausgeführt. Dabei durchströmt die feuchte Druckluft ein Adsorptionsmittel, das aus kristallinen Metall-Aluminosilikaten besteht und durch seine große spezifische Oberfläche der feuchten Luft Wasserdampf entzieht. Das anfallende Kondensat weist oft Ölrückstände auf, so dass es als Sondermüll kostspielig entsorgt werden muss.

Der vorliegenden Erfindung liegt die Aufgabe zugrunde, eine druckluftbetätigte Bremseinrichtung eines Schienenfahrzeugs derart weiterzubilden, dass sie einfacher und kostengünstiger zu realisieren und weniger Wartungsaufwand notwendig ist. Erfindungsgemäß wird diese Aufgabe durch die Merkmale von Patentanspruch 1 gelöst.

### Vorteile der Erfindung

Da nicht wie beim Stand der Technik die unerwünschten Wasserdampf und Staub aufweisende Umgebungsluft sondern vorzugsweise bereits getrocknete und gereinigte Luft als Arbeitsluft innerhalb eines geschlossenen Luftkreislaufs verwendet werden kann, kann auf einen Lufttrockner verzichtet werden. Dies resultiert in einem einfacheren und kostengünstigeren Aufbau der Bremseinrichtung. Darüber hinaus entfällt auch der Wartungsaufwand für den Lufttrockner, insbesondere die regelmäßige Reinigung des Staubfilters oder das Entleeren und Entsorgen des kondensierten und mit Ölrückständen verunreinigten Wassers.

Die volumenveränderliche Bauform des Hauptluftbehälter ermöglicht das Einstellen eines bestimmten Druckniveaus der Arbeitsluft im Hauptluftbehälter. Wenn beispielsweise die unter Druck stehende Arbeitsluft aus der Druckkammer des Bremszylinders in den Hauptluftbehälter abgelassen wird, erfolgt eine Vergrößerung dessen Volumens, um die verdichtete Arbeitsluft auf ein niedrigeres Druckniveau zu entspannen, beispielsweise auf den Umgebungsdruck. Andererseits reagiert der Hauptluftbehälter mit einer Volumenverringerung auf das Ansaugen von Arbeitsluft durch den Verdichter, was eine Drucksteigerung im Hauptluftbehälter beispielsweise auf den Umgebungsdruck zur Folge hat. Die Anpassung des Volumens des Hauptluftbehälters abhängig vom jeweiligen Arbeitstakt der Arbeitsluft ermöglicht folglich deren Zirkulation innerhalb eines geschlossenen Luftkreislaufs.

Durch die in den Unteransprüchen aufgeführten Maßnahmen sind vorteilhafte Weiterbildungen und Verbesserungen der im Patentanspruch 1 angegebenen Erfindung möglich.

Gemäß einer besonders bevorzugten Ausführungsform der Erfindung ist die Bremseinrichtung eine dezentrale Bremseinrichtung und einem Drehgestell oder Wagen eines Schienenfahrzeugs zugeordnet. In diesem Fall kann eine kostenintensive, sich entlang des gesamten Schienenfahrzeugs erstreckende Hauptluftleitungsverrohrung mit zahlreichen Kupplungen zwischen den einzelnen Wagen entfallen. Bei Serienfertigung sinken zudem die für die mehrfach vorhandenen Bauelemente wie beispielsweise für Verdichter und Hauptluftbehälter anfallenden Stückkosten mit steigender Stückzahl. Wegen des geringeren Luftumsatzes in einem solchen dezentralen System bauen die Komponenten außerdem kleiner und sind folglich günstiger.

Gemäß einer Weiterbildung der Bremseinrichtung sind zumindest einige ihrer Komponenten wie beispielsweise der Verdichter elektrisch betätigt ausgebildet und von einem gemeinsamen Datenbus angesteuert. Schnittstellen eines Datenbuses zwischen den einzelnen Wagen eines Schienfahrzeugs sind gegenüber denen pneumatischer Leitungen wesentlich einfacher und kostengünstiger zu realisieren.

Gemäß einer weiteren Ausführungsform kann zum Ausgleich von allmählich stattfindenden Arbeitsluftverlusten bei einer oder mehrerer dezentraler Bremseinrichtungen eine zentrale Druckluftversorgung vorgesehen sein, welche einen Verdichter zum Verdichten von Umgebungsluft sowie einen Lufttrockner beinhaltet. Eine solche zentrale Druckluftversorgung kann beispielsweise einem Wagen des Schienenfahrzeugs zugeordnet und zu dem genannten Zweck für sämtliche dezentralen Bremseinrichtungen in diesem und in den anderen Wagen vorgesehen sein. Da diese zentrale Druckluftversorgung lediglich zum Ausgleich von Arbeitsluftverlusten und nicht wie beim Stand der Technik zum Erzeugen der gesamten benötigten Arbeitsluft dient, kann sie relativ klein bauen, was sich neben einem geringen Bauraumbedarf auch günstig auf die Kosten auswirkt. Dann kann beispielsweise in einer Leitung zwischen dem Hauptluftbehälter und dem Verdichter ein vorzugsweise als einfaches Rückschlagventil ausgeführtes Sicherheitsventil angeordnet sein, mit welchem der Luftkreislauf mit der zentralen Druckluftversorgung in Verbindung bringbar ist. Da die zwischen der zentralen Druckluftversorgung und dem lokalen Luftkreislauf bewegten Luftmengen gering sind, kann die von der zentralen Duckluftversorgung zu dem Sicherheitsventil heranzuführende Druckluftleitung beispielsweise durch einen kostengünstigen Kunststoffschlauch gebildet werden und an den Schnittstellen zwischen den Wagen Automotivkupplungen vorgesehen sein. Bei einem Riss dieses Schlauches kann über das Rückschlagventil Luft aus der Umgebung über die Leckstelle in den geschlossenen Luftkreislauf angesaugt werden. Die Funktion ist somit auch bei dieser Störung gewährleistet.

Vorzugsweise wird der Hauptluftbehälter durch einen Zylinder mit verschieblichem Kolben gebildet, dessen eine Kolbenfläche durch den Druck der Arbeitsluft und die andere Kolbenfläche durch den Umgebungsdruck belastet ist. Alternativ könnte wenigstens ein Teil einer Wand des Hauptluftbehälters elastisch dehnbar ausgebildet sein. In beiden Fällen erfolgt dann die Einstellung des Drucks der Arbeitsluft auf den Umgebungsdruck in vorteilhafter Weise automatisch, da der gegenüber diesem vorrübergehend höhere oder niedrigere Arbeitsdruck das Volumen des Hauptluftbehälters durch Verschiebung des Kolbens bzw. Dehnung der elastischen Wand derart anpasst, dass sich Druckausgleich einstellt. Anstatt durch den Umgebungsdruck könnte die elastische Wand bzw. der Kolben von außen durch einen beliebigen Druck belastet sein, welcher die Arbeitstakte der Arbeitsluft innerhalb des geschlossenen Luftkreislaufs gewährleistet.

Besonders bevorzugt ist der pneumatische Bremszylinder als passiver Bremszylinder ausgebildet, wobei ein Stellkolben des Bremszylinders durch eine Feder in Bremszuspannrichtung federbelastet und durch Druckbeaufschlagung der Druckkammer in Bremslösestellung bringbar ist. Die Druckkammer kann dann mit dem unter Arbeitsdruck stehenden Vorratsluftbehälter bzw. mit dem unter Umgebungsdruck stehenden Hauptluftbehälter mittels jeweils eines elektrisch betätigbaren Ventils in Verbindung gebracht werden. Die Rückleitung zum Hauptluftbehälter kann dann mit kleinem Querschnitt ausgeführt werden.
Besonders bevorzugt ist zwischen dem Luftverdichter und dem Vorratsluftbehälter ein Sicherheitsventil angeordnet ist. Bei Ausfall eines dezentralen Luftverdichters kann die Versorgung mit Druckluft vollständig von einem zentralen Luftverdichter übernommen werden.

### Zeichnungen

Ein Ausführungsbeispiel der Erfindung ist in der Zeichnung dargestellt und in der nachfolgenden Beschreibung näher erläutert. Die einzige Figur der Zeichnung zeigt eine schematische Darstellung einer druckluftbetätigten Bremseinrichtung eines Schienenfahrzeugs gemäß einer bevorzugten Ausführungsform der Erfindung.

### Beschreibung des Ausführungsbeispiels

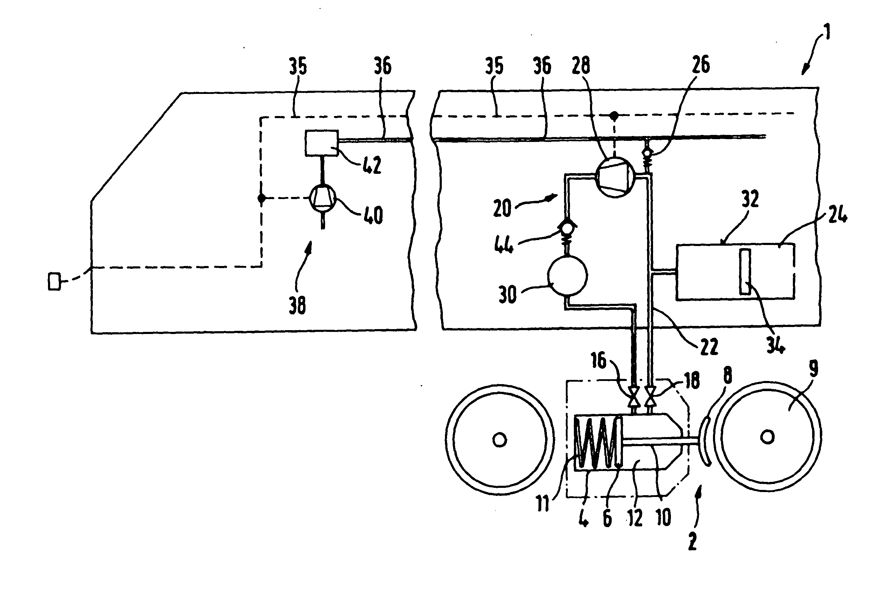

Die in Fig. 1 insgesamt mit 1 bezeichnete Bremseinrichtung ist gemäß einer bevorzugten Ausführungsform eine einem Drehgestell eines Wagens eines Schienenfahrzeugs zugeordnete dezentrale Bremseinrichtung und betätigt eine Klotzbremse 2. Die Klotzbremse beinhaltet einen mit einem innerhalb eines Bremszylinders 4 linear beweglichen Stellkolben 6 gekoppelten Bremsklotz 8, der mit einer aus Maßstabsgründen nicht dargestellten Bremsfläche eines Rades 9 des Drehgestells zusammenwirkt. Vorzugsweise ist der Bremsklotz 8 an einer Kolbenstange 10 des Stellkolbens 6 festgelegt, jedoch kann dem Stellkolben 6 und dem Bremsklotz 8 auch ein Bremsgestänge in bekannter Weise zwischengeordnet sein. Anstatt einer Klotzbremse 2 kann auch eine Scheibenbremse durch den Bremszylinder 4 betätigt werden.

Der Bremszylinder 4 ist vorzugsweise als passiver Bremszylinder ausgeführt, d.h. dass der Stellkolben 6 durch eine Feder 11 in Bremszuspannrichtung federbelastet ist und durch Druckbeaufschlagung einer zwischen der von der Feder 11 weg weisenden Kolbenseite und einer Wand des Bremszylinders 4 gebildeten Druckkammer 12 in Bremslösestellung gebracht wird. Die Druckkammer 12 des Bremszylinders 4 wird durch ein Belüftungsventil 16 und ein Entlüftungsventil 18 be- bzw. entlüftet.

Der Bremszylinder 4 bildet eine Komponente eines geschlossenen, getrocknete und gereinigte Arbeitsluft führenden Luftkreislaufs 20 der dezentralen Bremseinrichtung 1,
wobei sein vorzugsweise elektrisch betätigtes Entlüftungsventil 18 ausgangsseitig mit einer Luftleitung 22 des Luftkreislaufs 20 in Verbindung steht, in welcher in der Zirkulationsrichtung der Arbeitsluft gesehen die folgenden weiteren Komponenten angeordnet sind : Ein Arbeitsluft speichernder Hauptluftbehälter 24, ein Sicherheitsventil 26, ein Luftverdichter 28 zur Verdichtung der Arbeitsluft sowie ein dem Bremszylinder 4 zugeordneter Vorratsluftbehälter 30 zur Speicherung der verdichteten Arbeitsluft.

Der Hauptluftbehälter 24 ist derart ausgebildet, dass er zur Einstellung eines bestimmten Druckniveaus sein Volumen ändern kann, d.h. abhängig von dem in ihm anfänglich herrschenden Druck wird zunächst ein bestimmtes Volumen eingestellt, welches wiederum einen gewissen Druck bedingt. Der Hauptluftbehälter 24 besteht vorzugsweise aus einem Zylinder 32 mit einem von diesem linear geführten Kolben 34, dessen eine Kolbenfläche durch den Druck der Arbeitsluft und die andere Kolbenfläche vorzugsweise durch den Umgebungsdruck belastet ist. Alternativ könnte wenigstens ein Teil einer Wand des Hauptluftbehälters 24 elastisch dehnbar ausgebildet oder innerhalb des Hauptluftbehälters 24 ein elastischer, vorzugsweise aus Kunststoffolie bestehender Sack aufgenommen sein. Dann stellt sich aufgrund vorrübergehend veränderter Druckverhältnisse das Volumen des Hauptluftbehälters automatisch so ein, dass in ihm Umgebungsdruck herrscht. Der dem Hauptluftbehälter in der Luftleitung 22 nachgeordnete Verdichter 28 ist beispielsweise als Kolbenluft- oder Schraubenverdichter ausgeführt und dient zum Verdichten der Arbeitsluft aus dem Hauptluftbehälter 24. Der Vorratsluftbehälter 30 bevorratet die durch den Verdichter 28 verdichtete Arbeitsluft und steht ausgangsseitig mit dem Belüftungsventil 16 in Verbindung.

Das Belüftungsventil 16, das Entlüftungsventil 18 sowie der Luftverdichter 28 stehen mit einer den gesamten Schienenfahrzeugzug überspannenden elektrischen Energieversorgung 35 und einem ebenfalls den gesamten Schienenfahrzeugzug überspannenden Datenbus 35, insbesondere einem CAN-Bus in Verbindung, um in diese Komponenten von einer mit dem Datenbus 35 kommunizierenden zentralen Steuereinrichtung ausgesteuerte, auf einem Bremswunsch des Fahrers basierende Bremsanforderungssignale oder Bremslösesignale einzusteuem und um die elektrischen Komponenten 16, 18, 28 mit elektrischer Energie zu versorgen.

Der geschlossene Luftkreislauf 20 ist mit getrockneter und gereinigter Arbeitsluft befüllt und im wesentlichen hermetisch dicht. Falls mit der Zeit dennoch Arbeitsluftverluste auftreten sollten, steht der Luftkreislauf 20 mittels einem lediglich zu diesem hin öffnenden Rückschlagventil 26 mit einer das gesamte Schienenfahrzeug überspannenden Hauptluftleitung 36 in Verbindung, an welche vorzugsweise weitere dezentrale Bremseinrichtungen angeschlossen sind. Die Hauptluftleitung 36 steht mit einer zentralen, in einem der Wagen des Schienenfahrzeugs angeordneten Druckluftversorgung 38 in Verbindung, welche einen Verdichter 40 zum Verdichten von Umgebungsluft sowie einen Lufttrockner 42 beinhaltet. Über das als Rückschlagventil 26 ausgebildete Sicherheitsventil können dann Arbeitsluftverluste durch Nachförderung mittels der zentralen Druckluftversorgung 38 ausgeglichen werden. Anstatt eines Rückschlagsventil 26 könnte beispielsweise auch ein Magnetventil verwendet werden, welches bei zu geringer Arbeitsluftmenge im Hauptluftbehälter 24 öffnet. Auch die Stellung des Kolbens 34 des Hauptluftbehälters 24 kann zur rein pneumatischen Steuerung der Nachförderung über ein mechanisch betätigtes Ventil genutzt werden.

Vor diesem Hintergrund ist die Funktionsweise der Bremseinrichtung 1 wie folgt : Ausgehend von einer Lösestellung der Bremseinrichtung 1, in welcher die Druckkammer 12 belüftet und der Stellkolben 6 gegen die Wirkung der Feder 11 in eine Position gebracht ist, in welcher der Bremsklotz 8 von der Bremsfläche des Rades 9 abgehoben ist, wird durch ein Bremsanforderungssignal das Entlüftungsventil 18 geöffnet, während das Belüftungsventil 16 geschlossen bleibt. Infolgedessen strömt aufgrund des Druckgefälles zwischen der unter Arbeitsdruck stehenden Druckkammer 12 und dem im wesentlichen unter Umgebungsdruck stehenden Hauptluftbehälter 24 Arbeitsluft von der Druckkammer 12 in den Hauptluftbehälter 24. Auf den sinkenden Arbeitsdruck in der Druckkammer 12 hin entspannt sich die Feder 11 und drängt den Stellkolben 6 in Bremsstellung, in welcher der Bremsklotz 8 an der Bremsfläche des Rades 9 anliegt. Weiterhin sorgt die vorübergehende Drucksteigerung im Hauptluftbehälter 24 für eine Verschiebung des Kolbens 34 nach außen und folglich zu einer Volumenvergrößerung des Hauptluftbehälters 24 bis am Kolben 34 Kräftegleichgewicht herrscht und die Arbeitsluft im Hauptluftbehälter 24 etwa auf Umgebungsdruck entspannt ist. Daraufhin wird das Entlüftungsventil 18 geschlossen.

Zum Lösen der Bremse wird unter Druck stehende Arbeitsluft benötigt, weshalb der Luftverdichter 28 aus dem Hauptluftbehälter 24 Arbeitsluft ansaugt, wobei sich der Kolben 34 aufgrund der Drucksenkung in Richtung einer Verkleinerung des Volumens des Hauptluftbehälters 24 bewegt. Um möglichst wenig Energieverluste durch das Verschieben des Kolbens 34 zu erzeugen, ist dieser sehr reibungsarm in dem Zylinder 32 gelagert. Die Gleichgewichtsstellung des Kolbens 34 stellt sich wiederum dann ein, wenn im Hauptluftbehälter 24 etwa Umgebungsdruck herrscht.

Vom Luftverdichter 28 gelangt die komprimierte Arbeitsluft in den Vorratsluftbehälter 30 der wenigstens ein Volumen an komprimierter Arbeitsluft speichern kann, welches zum Lösen der Bremse ausreicht. Im Falle eines aktiven Bremszylinders 4 müßte das gespeicherte Volumen an Arbeitsluft wenigstens zum Bremsen genügen. Wenigstens diese Menge an Arbeitsluft muß der Hauptluftbehälter 24 durch Verschieben des Kolbens 34 bereitstellen. Einerseits verhindert ein dem Luftverdichter 28 und dem Vorratsluftbehälter 30 zwischengeordnetes und eine Strömung lediglich in Richtung Vorratsluftbehälter 30 gestattendes Rückschlagventil 44 und andererseits das bisher noch geschlossene Belüftungsventil 16, dass die unter Druck stehende Arbeitsluft aus dem Vorratsluftbehälter 30 entweichen kann. Auf ein Bremslösesignal hin wird das Belüftungsventil 16 geöffnet, woraufhin die komprimierte Arbeitsluft in die Druckkammer 12 des Bremszylinders 4 strömt und den Stellkolben 6 in Bremslösestellung verschiebt.

Die Erfindung ist nicht auf eine dezentrale Bremseinrichtung 1 beschränkt, welche lediglich einem Drehgestell oder einem Wagen des Schienenfahrzeugs zugeordnet ist. Vielmehr könnten für mehrere Drehgestelle oder Wagen ein einziger, zentral angeordneter Hauptluftbehälter 24 und/oder ein einziger, zentral angeordneter Verdichter 28 zur Versorgung mehrerer drehgestellseitiger Vorratsluftbehälter 30 vorgesehen sein.

### Bezugszahlenliste

- 1: Bremseinrichtung
- 2: Klotzbremse
- 4: Bremszylinder
- 6: Stellkolben
- 8: Bremsklotz
- 9: Rad
- 10: Kolbenstange
- 11: Feder
- 12: Druckkammer
- 16: Belüftungsventil
- 18: Entlüftungsventil
- 20: Luftkreislauf
- 22: Luftleitung
- 24: Hauptluftbehälter
- 26: Rückschlagventil
- 28: Luftverdichter
- 30: Vorratsluftbehälter
- 32: Zylinder
- 34: Kolben
- 35: Datenbus und elektrische Energieversorgung
- 36: Hauptluftleitung
- 38: zentrale Druckluftversorgung
- 40: Verdichter
- 42: Lufttrockner
- 44: Rückschlagventil.

## Patentansprüche

1. Druckluftbetätigte Bremseinrichtung (1) eines Schienenfahrzeugs, beinhaltend wenigstens folgende, innerhalb eines geschlossenen und im wesentlichen stets die gleiche Arbeitsluftmenge zirkulierenden Luftkreislaufs (20) angeordnete Bauelemente :
a) Einen Arbeitsluft speichernden Hauptluftbehälter (24) mit veränderbarem Volumen zum Einstellen eines vorgegebenen Druckniveaus;
b) einen Luftverdichter (28) zur Verdichtung der Arbeitsluft;
c) einen Vorratsluftbehälter (30) zur Speicherung einer wenigstens zum Bremsen oder Bremslösen benötigten Menge an verdichteter Arbeitsluft;
d) einen pneumatischen Bremszylinder (4) mit wenigstens einer Druckkammer (12), welche einerseits mit dem Vorratsluftbehälter (30) und andererseits mit dem Hauptluftbehälter (24) in Verbindung bringbar ist.

2. Bremseinrichtung nach Anspruch 1, **dadurch gekennzeichnet, dass** sie einer dezentrale Bremseinrichtung (1) und einem Drehgestell oder Wagen eines Schienenfahrzeugs zugeordnet ist.

3. Bremseinrichtung nach Anspruch 2, **dadurch gekennzeichnet, dass** zumindest einige ihrer Komponenten wie beispielsweise der Luftverdichter (28) elektrisch betätigt ausgebildet und über einen gemeinsamen Datenbus (35) angesteuert sind.

4. Bremseinrichtung nach einem der Ansprüche 2 oder 3, **dadurch gekennzeichnet, dass** eine zentrale Druckluftversorgung (38) zum Ausgleich von Druckluftverlusten von mehreren dezentralen Bremseinrichtungen (1) vorgesehen ist, welche einen Verdichter (40) zum Verdichten von Umgebungsluft sowie einen Lufttrockner (42) beinhaltet.

5. Bremseinrichtung nach Anspruch 4, **dadurch gekennzeichnet, dass** in einer Leitung (22) zwischen dem Hauptluftbehälter (24) und dem Luftverdichter (28) ein Sicherheitsventil (26) angeordnet ist, mit welchem der Luftkreislauf (20) mit der zentralen Druckluftversorgung (38) in Verbindung bringbar ist.

6. Bremseinrichtung nach Anspruch 5, **dadurch gekennzeichnet, dass** der Hauptluftbehälter (24) durch einen Zylinder (32) mit in ihm geführten Kolben (34) gebildet wird, dessen eine Kolbenfläche durch den Druck der Arbeitsluft und die andere Kolbenfläche durch den Umgebungsdruck belastet ist.

7. Bremseinrichtung nach Anspruch 6, **dadurch gekennzeichnet, dass** das Sicherheitsventil (26) abhängig von der Stellung des Kolbens (34) betätigbar ist.

8. Bremseinrichtung nach einem der Ansprüche 1 bis 5, **dadurch gekennzeichnet, dass** wenigstens ein Teil einer Wand des Hauptluftbehälters (24) elastisch dehnbar ausgebildet ist.

9. Bremseinrichtung nach einem der Ansprüche 1 bis 5, **dadurch gekennzeichnet, dass** im Hauptluftbehälter (24) ein elastischer, vorzugsweise aus Kunststoffolie bestehender Sack aufgenommen ist.

10. Bremseinrichtung nach einem der vorhergehenden Ansprüche, **dadurch gekennzeichnet, dass** dem Luftverdichter (28) und dem Vorratsluftbehälter (30) ein Sicherheitsventil in Form eines Rückschlagventils (44) zwischengeordnet ist.

11. Bremseinrichtung nach einem der vorhergehenden Ansprüche, **dadurch gekennzeichnet, dass** der pneumatische Bremszylinder (4) als passiver Bremszylinder ausgebildet ist, wobei ein Stellkolben (6) des Bremszylinders (4) durch eine Feder (11) in Bremszuspannrichtung federbelastet und durch Druckbeaufschlagung der Druckkammer (12) in Bremslösestellung bringbar ist.

12. Bremseinrichtung nach Anspruch 11, **dadurch gekennzeichnet, dass** die Druckkammer mit dem Vorratsluftbehälter (30) und andererseits mit dem Hauptluftbehälter (24) mittels elektrisch betätigbarer Ventile (16, 18) in Verbindung bringbar ist.
